# EUROPEAN PATENT APPLICATION

(11) **EP 4 751 963 A1**
(43) Date of publication of application: **03.06.2026**
(21) Application number: 25216564.2
(22) Date of filing: 18.11.2025
(51) Int. Cl.: B60K 35/00, B60K 35/10, B60K 35/22

(54) **IN-VEHICLE SYSTEM AND INFORMATION PROCESSING APPARATUS**

(30) Priority: 29.11.2024 JP 2024208738
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

A display device (20) includes a touch panel (27), a first display unit (21) disposed in front of a steering wheel (4), a second display unit (22, 23) disposed on at least one side of the first display unit (21) in a vehicle width direction and also disposed on a rear side of a vehicle (1) with respect to the first display unit (21), and a third display unit (24, 25) with a curved surface (241, 242) connecting the first display unit (21) and the second display unit (22, 23) to each other, and an information processing apparatus (10) has a controller (100) configured to execute outputting (S106), to the display device (20), a command to display a screen indicating that a plurality of pages are present on the third display unit (24, 25) in a case where the plurality of pages are present on a screen displayed on the second display unit (22, 23).

## Description

### BACKGROUND

### Technical Field

The present disclosure relates to an in-vehicle system and an information processing apparatus.

### Description of the Related Art

There has been known a vehicle including a steering wheel, a center display unit provided in front of the steering wheel, and a side display unit provided on one side or each side of the center display unit in a vehicle width direction (for example, refer to Patent Literature 1).

### Citation List

### Patent Literature

Patent Literature 1: Japanese Patent No. 07306210

### SUMMARY

An object of the present disclosure is to effectively use a display having a curved surface.

One aspect of the present disclosure is directed to an in-vehicle system including a display device, and an information processing apparatus configured to output information via the display device,
the display device including:
a touch panel;
a first display unit disposed in front of a steering wheel;
a second display unit disposed on at least one side in a vehicle width direction with respect to the first display unit, the second display unit being also disposed on a rear side of a vehicle with respect to the first display unit; and
a third display unit connecting the first display unit and the second display unit to each other and having a curved surface;
the information processing apparatus including a controller and a storage,
the controller being configured to execute:
   determining, according to information stored in the storage, whether or not a plurality of pages are present on a screen displayed on the second display unit; and
   generating a command to display a screen indicating the presence of the plurality of pages on the third display unit in response to determining that the plurality of pages are present on the screen displayed on the second display unit.

Another aspect of the present disclosure is directed to an in-vehicle system including a display device, and an information processing apparatus configured to output information via the display device,
the display device including:
a touch panel;
a first display unit disposed in front of a steering wheel;
a second display unit disposed on at least one side in a vehicle width direction with respect to the first display unit, the second display unit being also disposed on a rear side of a vehicle with respect to the first display unit; and
a third display unit connecting the first display unit and the second display unit to each other and having a curved surface;
the information processing apparatus including a controller configured to execute:
   outputting, to the display device, a command to display a screen indicating the presence of a plurality of pages on the third display unit in a case where the screen displayed on the second display unit includes the plurality of pages.

A further aspect of the present disclosure is directed to an information processing apparatus configured to output information via a display device,
the display device including:
a touch panel;
a first display unit disposed in front of a steering wheel;
a second display unit disposed on at least one side in a vehicle width direction with respect to the first display unit, the second display unit being also disposed on a rear side of a vehicle with respect to the first display unit; and
a third display unit connecting the first display unit and the second display unit to each other and having a curved surface;
the information processing apparatus including a controller configured to execute:
   outputting, to the display device, a command to display a screen indicating the presence of a plurality of pages on the third display unit in a case where the screen displayed on the second display unit includes the plurality of pages.

A still further aspect of the present disclosure is directed to a vehicle equipped with the above-mentioned in-vehicle system, an information processing method to be executed by the information processing apparatus, a program for causing a computer to execute the information processing method, or a non-transitory computer readable storage medium storing the program.

According to the present disclosure, it is possible to effectively use a display having a curved surface.

### BRIEF DESCRIPTION OF THE DRAWINGS

FIG. 1 is a view illustrating a passenger compartment of a vehicle;
FIG. 2 is a view illustrating a schematic configuration of a display device and its periphery;
FIG. 3 is a diagram illustrating the transition of a plurality of types of screens output to an inner display;
FIG. 4 is a view illustrating an example of a home screen;
FIG. 5 is a diagram illustrating an example of a menu screen;
FIG. 6 is a view illustrating an example of a screen displayed on each of a meter display, an inner display, and an inner connection display;
FIG. 7 is a view illustrating another example of the screen displayed on each of the meter display, the inner display, and the inner connection display;
FIG. 8 is a diagram schematically illustrating an example of a hardware configuration of the vehicle;
FIG. 9 is a diagram illustrating a functional configuration of an ECU;
FIG. 10 is a flowchart of processing in the ECU when content is displayed;
FIG. 11 is a view illustrating an example in which only a left half of a second page of content is displayed on the inner connection display;
FIG. 12 is a view illustrating an example in which characters indicating that the next page of the content is present are displayed on the inner connection display;
FIG. 13 is a view illustrating an example in which only a part of a frame of the next page of the content is displayed on the inner connection display; and
FIG. 14 is a view illustrating an example in which arrows indicating that the next page of the content is present are displayed on the inner connection display.

### DESCRIPTION OF THE EMBODIMENTS

In recent years, as automobiles have become more sophisticated, displays for providing information have become larger and larger. For example, it is conceivable to arrange a large display with a curved surface in order to direct the display toward the driver. However, the curved surface may be unsuitable for information display and user operation because of the risk of distortion and uneven brightness.

On the other hand, an in-vehicle system according to one aspect of the present disclosure includes a display device and an information processing apparatus configured to output information via the display device, wherein the display device includes a touch panel, a first display unit disposed in front of a steering wheel, a second display unit that is disposed on at least one side in a vehicle width direction with respect to the first display unit and is also disposed on a rear side of a vehicle with respect to the first display unit, and a third display unit connecting the first display unit and the second display unit to each other and having a curved surface, and wherein the information processing apparatus has a controller configured to execute outputting, to the display device, a command to display a screen indicating that a plurality of pages are present on the third display unit in a case where the plurality of pages are present on a screen displayed on the second display unit.

The display device includes the first display unit, the second display unit, and the third display unit. The first display unit is a display disposed in front of the steering wheel and in front of the driver. The second display unit is disposed on a vehicle right side or a vehicle left side of the first display unit, and is also disposed on a vehicle rear side of the first display unit. The second display unit may be a pair of displays disposed at positions on both sides of the steering wheel. In addition, the second display unit has a configuration in which a touch operation can be performed by a touch panel. Note that the first display unit and the third display unit may also have a configuration in which a touch operation by a touch panel is possible.

The second display unit is disposed at a position closer to the driver than the first display unit. By providing the second display unit at such a position, the touch panel can be disposed in the vicinity of a portion of the steering wheel gripped by the driver. That is, at the time of operation, it is possible to minimize the time during which the driver has to release his/her hands from the steering wheel. Note that the steering wheel does not necessarily have to be circular as long as it has a grip portion and is rotated to perform a steering operation.

The third display unit is disposed so as to connect the first display unit and the second display unit to each other. The third display unit has curved surfaces. These curved surfaces may be formed in a connection portion between the first display unit and the third display unit and a connection portion between the second display unit and the third display unit, respectively. In addition, the third display unit as a whole may be formed of a curved surface. Also, the first display unit and the second display unit each may have a curved surface. In this case, the curvatures of the respective display units may be determined so that the curvature of the curved surface related to the third display unit is the largest. The first display unit, the second display unit, and the third display unit may be integrally formed.

The first display unit, the second display unit, and the third display unit display content, for example. The content includes content related to the control of the vehicle or content related to the convenience of occupants of the vehicle. The content related to the convenience of the occupants of the vehicle may include content for providing entertainment to the occupants of the vehicle, content related to the comfort of the occupants, or the like. The content related to the comfort or convenience of the occupants includes, for example, an interface for operating an audio, a navigation system, an air conditioner, a telephone, a clock, a voice assistant, or the like, and presentation of information related to the operation status of these equipment. In addition, the content related to the control of the vehicle may include information related to the traveling of the vehicle. The content related to the control of the vehicle includes, for example, interfaces for operating headlights, wipers, side mirrors, ADAS (Advanced Driver Assistance System), drive mode, vehicle height, the position of the steering wheel, the positions of seats, etc., as well as the presentation of information about the operation status of these equipment.

In a case where a plurality of pages are present on the screen displayed on the second display unit, the controller outputs, to the display device, a command to display, on the third display unit, a screen indicating that the plurality of pages are present. Then, a user looking at the third display unit can notice that there are a plurality of pages in the content or the like displayed on the second display unit. In addition, since the third display unit has a curved surface, the image thereon may be distorted, but the third display unit only needs to display the information that a plurality of pages are present, so that, even if the image is distorted, the discomfort felt by occupants is relatively small. In this manner, the third display unit can be effectively used.

In addition, the controller may output, to the display device, a command to display, on the third display unit, at least a part of display items of a page next to a page to be displayed on the second display unit as a screen indicating that the plurality of pages are present. In this way, by displaying at least a part of the next page on the third display unit, the user can easily know that the next page is present. In addition, the user can know what is displayed on the next page.

The controller may output, to the display device, a command to display, on the third display unit, characters or a graphic indicating that a page next to a page to be displayed on the second display unit is present, as a screen indicating that the plurality of pages are present. In this manner, if the information indicating that the next page exists is displayed on the third display unit, the user can easily know that the next page is present.

Hereinafter, embodiments of the present disclosure will be described based on the accompanying drawings. The configurations of the following embodiments are examples, and the present disclosure is not limited to the configurations of the embodiments. In addition, the following embodiments can be combined with one another as long as such combinations are possible and appropriate.

### <First Embodiment>

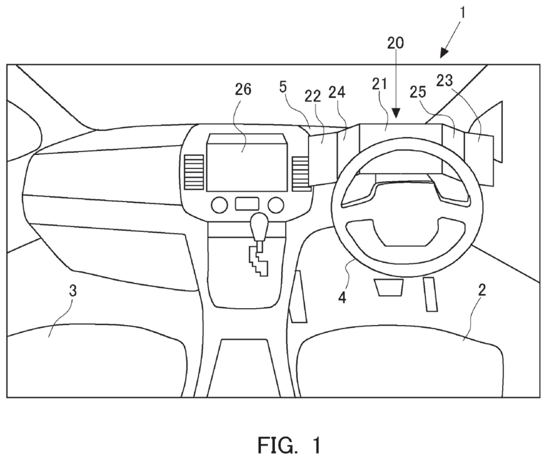

FIG. 1 is a view illustrating a passenger compartment of a vehicle 1. A driver's seat 2 and a passenger seat 3 are provided in a passenger compartment of the vehicle 1. Note that the vehicle 1 of the present embodiment is a right-hand drive vehicle, and the driver's seat 2 is provided on the right side in the traveling direction of the vehicle 1. A steering wheel 4 is disposed in front of the driver's seat 2. The steering wheel 4 may be circular or U-shaped (a so-called irregular shaped steering wheel). The steering wheel 4 is connected to a steering device of the vehicle 1 via a steering column. The steering column is covered by a column cover.

The passenger seat 3 is provided on the left side of the driver's seat 2, and a center display 26 is disposed on the front side of the vehicle at an intermediate position between the driver's seat 2 and the passenger seat 3. The center display 26 displays, for example, auxiliary information such as vehicle navigation, or contents related to entertainment such as audio and television.

A display device 20 is provided on the vehicle front side of the steering wheel 4. The display device 20 includes a meter display 21 located in front of the driver's seat 2, an inner display 22 located behind the meter display 21 and inside the vehicle 1, an outer display 23 located behind the meter display 21 and outside the vehicle 1, an inner connection display 24 connecting the meter display 21 and the inner display 22 to each other, and an outer connection display 25 connecting the meter display 21 and the outer display 23 to each other. Note that the meter display 21 is an example of a first display unit, the inner display 22 and the outer display 23 are examples of a second display unit, and the inner connection display 24 and the outer connection display 25 are examples of a third display unit.

Note that the term "outside the vehicle 1" refers to a side close to the outside of the vehicle 1 when viewed from the driver's seat 2, and refers to the door side of the driver's seat 2. Also, the term "inside the vehicle 1" refers to the side of the passenger seat 3 as viewed from the driver seat 2, and refers to the door side of the passenger seat 3. For example, in the vehicle 1 in which the steering wheel is provided on the right side of the vehicle 1, the term "outside the vehicle 1" refers to the right side of the vehicle 1, and the term "inside the vehicle 1" refers to the left side of the vehicle 1. In addition, for example, in the vehicle 1 in which the steering wheel 4 is provided on the left side of the vehicle 1, the term "outside the vehicle 1" indicates the left side of the vehicle 1, and the term "inside the vehicle 1" indicates the right side of the vehicle 1. In the vehicle 1 in which the steering wheel is disposed at the center of the passenger compartment, for example, the terms "outside the vehicle 1 and "inside the vehicle 1" may be determined in an optional manner.

The meter display 21, the inner display 22, the outer display 23, the inner connection display 24, and the outer connection display 25 are all displays each having a touch panel. Note that the touch panel may be included in at least the inner display 22 and the outer display 23. As the touch panel, there can be adopted, for example, a pressure-sensitive touch panel, which detects the pressure with which the user presses the panel, and a capacitive touch panel, which detects a change in capacitance when the user presses the panel. The display is, for example, an LCD (Liquid Crystal Display) or EL (Electroluminescence) panel. Note that in the following, when the user touches the screen, it means that the user touches the touch panel. The meter display 21, the inner display 22, the outer display 23, the inner connection display 24, and the outer connection display 25 may be formed by deforming one touch screen or may be formed by combining individual touch screens with each other.

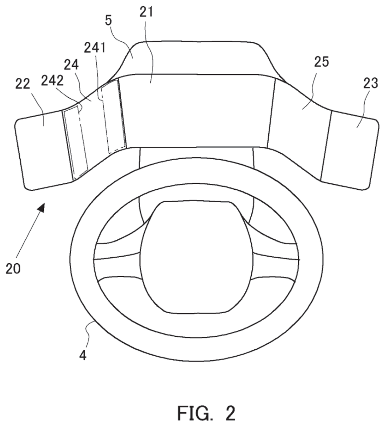

FIG. 2 is a view illustrating a schematic configuration of the display device 20 and its periphery. The display device 20 is fixed to the instrument panel 5. The meter display 21 is a horizontally long display, and the inner display 22, the outer display 23, the inner connection display 24, and the outer connection display 25 are vertically long displays. The meter display 21 is disposed so that the screen faces the rear of the vehicle, and is disposed parallel to the left-right direction (vehicle width direction) of the vehicle 1. Note that the meter display 21 may be disposed at a slight incline so as to face slightly upward.

The inner connection display 24 is connected to an end portion of the meter display 21 on the vehicle inner side. The inner connection display 24 is a display that extends from an end portion of the meter display 21 on the inner side of the vehicle toward the rear of the vehicle 1 and toward the inside of the vehicle 1. The inner display 22 is connected to an end portion of the inner connection display 24 on the vehicle inner side. The inner display 22 is a display that extends from the end portion of the inner connection display 24 on the vehicle inner side toward the rear of the vehicle 1 and toward the inside of the vehicle 1. Note that the angle of the inner display 22 with respect to the meter display 21 is smaller than the angle of the inner connection display 24 with respect to the meter display 21. The inner connection display 24 is curvedly connected to the meter display 21 and the inner display 22. The inner connection display 24 has a curved surface 241 that is concave toward the front side of the vehicle at its connection portion with the meter display 21, and has a curved surface 242 that is convex toward the rear side of the vehicle at its connection portion with the inner display 22. Note that the meter display 21 and the inner display 22 each may have a curved surface.

The outer connection display 25 is connected to an end portion of the meter display 21 on the vehicle outer side. The outer connection display 25 is a display that extends from the end portion of the meter display 21 on the outer side of the vehicle toward the rear of the vehicle 1 and the outside of the vehicle 1. The outer display 23 is connected to an end portion of the outer connection display 25 on the vehicle outer side. The outer display 23 is a display that extends from the end portion of the outer connection display 25 on the vehicle outer side toward the rear of the vehicle 1 and the outside of the vehicle 1. Note that the angle of the outer display 23 with respect to the meter display 21 is smaller than the angle of the outer connection display 25 with respect to the meter display 21. The outer connection display 25 is curvedly connected to the meter display 21 and the outer display 23. The outer connection display 25 has a curved surface that is concave toward the front side of the vehicle at its connection portion with the meter display 21, and has a curved surface that is convex toward the rear side of the vehicle at its connection portion with the outer display 23. Note that the meter display 21 and the outer display 23 each may have a curved surface.

As described above, the display device 20 extends from the upper portion of the steering column in the left-right direction (vehicle width direction), bends toward the steering wheel 4 in the middle, and further bends in such a manner that its angle with respect to the left-right direction of the steering wheel 4 becomes smaller. In this manner, the inner display 22 and the outer display 23 can be disposed in the vicinity of the grip portion of the steering wheel 4.

Further, the inner display 22 and the outer display 23 are angled with respect to the left-right direction of the steering wheel 4, and are each disposed so as to be inclined toward the steering wheel 4. That is, the inner display 22 is disposed to protrude more toward the rear of the vehicle 1 the more it is inside the vehicle 1, and the outer display 23 is disposed to protrude more toward the rear of the vehicle 1 the more it is outside the vehicle 1. In this manner, the inner display 22 and the outer display 23 are each disposed so as to face the driver.

The meter display 21 displays information necessary for traveling of the vehicle 1, such as the speed of the vehicle 1, the engine rotation speed (in the case where the vehicle 1 has an engine), the charge and discharge state (in the case where the vehicle 1 has a driving battery), the distance of travel, and the state of an ADAS.

The inner display 22 displays, for example, information related to the convenience of occupants of the vehicle 1 as content. The information related to the convenience of the occupants of the vehicle 1 includes information for providing entertainment to the occupants of the vehicle 1. The information related to the convenience of the occupants of the vehicle 1 may include information related to the comfort of the occupants. The information about the suitability and convenience of the occupants includes, for example, information about switches, buttons, etc., for operating audio, navigation device, air conditioner, telephone, clock, voice assistant, etc., and information about the operation status of these devices.

The outer display 23 displays, for example, information about the control of the vehicle 1 as content. The information about the control of the vehicle 1 includes information about the traveling of the vehicle 1. The information about the control of vehicle 1 includes, for example, information about switches, buttons, etc., for operating headlights, wipers, side mirrors, ADAS, drive mode, vehicle height, steering wheel position, and seat position, as well as information about the operation status of these devices.

Here, note that the information to be displayed on the inner display 22 and the outer display 23 is not limited to the above. The inner display 22 may display information about the control of the vehicle 1, and the outer display 23 may display information about the convenience of the occupants of the vehicle 1. In addition, information to be displayed on the inner display 22 and the outer display 23 can be determined in an optional manner.

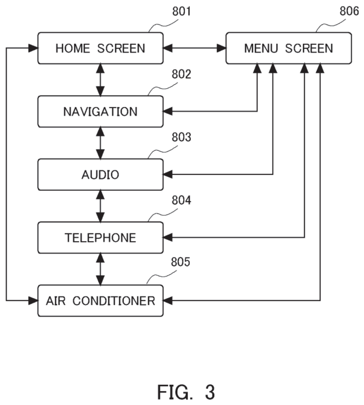

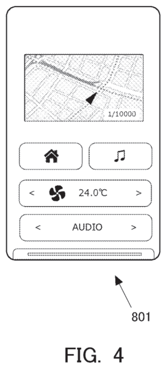

FIG. 3 is a diagram illustrating the transition of a plurality of types of screens output to the inner display 22. As illustrated, a plurality of screens are output onto the inner display 22, with a home screen 801 at the center. The home screen 801 is a screen that is normally displayed on the inner display while driving. FIG. 4 is a view illustrating an example of the home screen 801. The display content of the home screen 801 can be customized by the user. As shown in FIG. 3, the screen can be switched from the home screen 801 to a navigation screen 802, an audio screen 803, a phone screen 804, and an air conditioner screen 805 in this order, for example, by a swipe or flick operation.

The navigation screen 802 is a screen related to vehicle navigation. The audio screen 803 is a screen related to an audio function of the vehicle 1. The phone screen 804 is a screen for wirelessly connecting to a user terminal to make a hands-free call. The air conditioner screen 805 is a screen for controlling a car air conditioner of the vehicle 1.

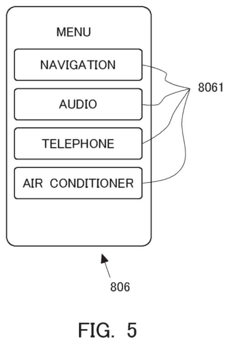

FIG. 5 is a diagram illustrating an example of a menu screen 806. The menu screen 806 can be called up, for example, by performing a predetermined operation (e.g., an operation of swiping upward from the bottom of the screen) on each screen, including the home screen 801. The menu screen 806 is a screen on which GUI components 8061 in the shape of buttons are displayed. The GUI components 8061 each display the name and icon of a corresponding content 201. The relationship between the position of each GUI component 8061 and the content 201 corresponding to the GUI component 8061 has been stored in a storage 110.

In a case where there are a plurality of pages on the screen displayed on the inner display 22, the inner connection display 24 displays a screen indicating that there are the plurality of pages. At this time, the inner connection display 24 may display information to inform the user that it is possible to switch to the next page. Similarly, in a case where there are a plurality of pages on the screen displayed on the outer display 23, the outer connection display 25 displays a screen indicating that there are the plurality of pages. At this time, the outer connection display 25 may display information to inform the user that it is possible to switch to the next page. Note that the inner connection display 24 and the outer connection display 25 need not display anything when there are no corresponding pages.

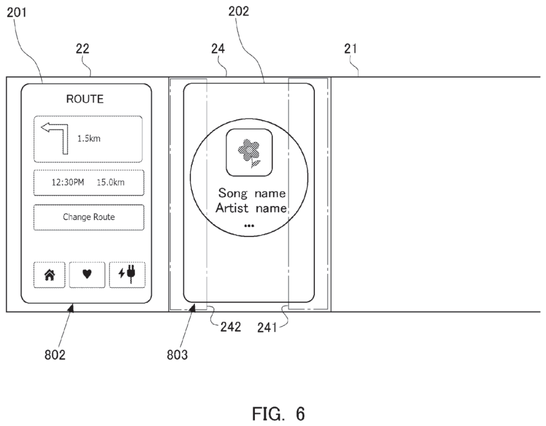

FIG. 6 is a view illustrating an example of a screen displayed on each of the meter display 21, the inner display 22, and the inner connection display 24. FIG. 6 illustrates the meter display 21, the inner display 22, and the inner connection display 24 on the same plane. Note that in FIG. 6, the illustration of information displayed on the meter display 21 is omitted. The same can be applied to the outer display 23 and the outer connection display 25.

In FIG. 6, the content 201 displayed on the inner display 22 is content related to navigation (hereinafter, also referred to as navigation content). That is, the navigation screen 802 is displayed on the inner display 22. For example, as illustrated in FIG. 3, the navigation screen 802 may be displayed by transitioning from the home screen 801. As another example, navigation content may be displayed as an initial screen, for example, when the display device 20 is activated. However, the initial screen is not limited to the navigation content, and may be other content. For example, the content that was displayed on the last screen in the previous session, or the content specified by the user, may be displayed on the initial screen. As illustrated in FIG. 3, the user can switch to the audio screen 803 by touching and swiping or flicking the navigation screen 802 displayed on the inner display 22. That is, a screen including a plurality of pages is displayed on the inner display 22. In the example illustrated in FIG. 6, as the content 202 of the next page, content related to audio (hereinafter, also referred to as audio content) is displayed on the inner connection display 24. That is, the audio screen 803 is displayed on the inner connection display 24. In this manner, in a case where the content 201 displayed on the inner display 22 can be switched, the content 202 of the next page is displayed on the inner connection display 24, so that the user can easily notice that the next page is present.

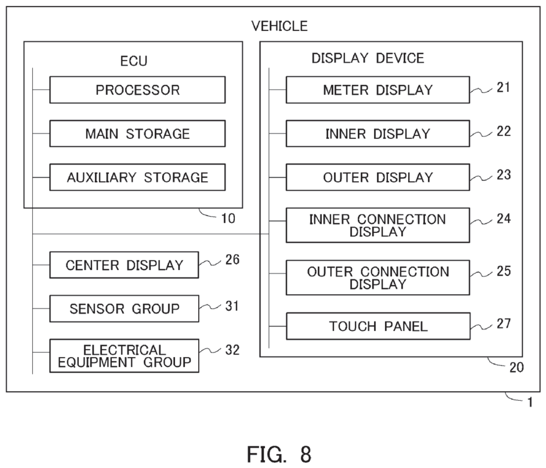

In addition, a single piece of content 201 may have a plurality of pages. For example, it is conceivable that the first page displays the status and overview of an electrical equipment group 32 in FIG. 8 to be described later, and the second page displays an operation screen for the electrical equipment group 32.

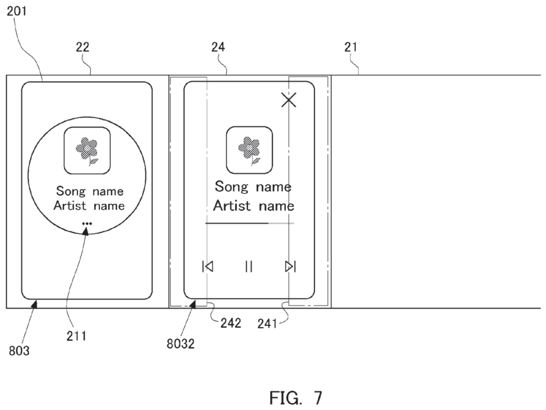

FIG. 7 is a view illustrating another example of the screen displayed on each of the meter display 21, the inner display 22, and the inner connection display 24. FIG. 7 illustrates the meter display 21, the inner display 22, and the inner connection display 24 on the same plane. Note that in FIG. 7, the illustration of information displayed on the meter display 21 is omitted. The same can be applied to the outer display 23 and the outer connection display 25. The content 201 illustrated in FIG. 7 is an audio content.

In the case of the audio content, an image corresponding to a song, a song name and an artist name thereof are displayed on the first page. The first page is the audio screen 803 shown in FIG. 3. In addition, on the first page, there is displayed a ellipsis icon 211, which is a GUI for moving to the second page. On the second page of the audio content, a screen 8032 displays a GUI for pausing playback and skipping the song, in addition to the image, the song name, and the artist name corresponding to the song or artist. In addition, a cross mark is displayed at the upper right of the screen 8032 of the second page. When the user taps the cross mark, the screen returns to the first page of the audio content.

Here, if the user overlooks the ellipsis icon, there is a possibility that the user does not notice that there is a next page in the content 201. Therefore, as illustrated in FIG. 7, the screen 8032 of the second page of the content 201 is displayed on the inner connection display 24. That is, the next page of the content 201 displayed on the inner display 22 is displayed on the inner connection display 24. By displaying the next page on the inner connection display 24, the user can easily notice that there is a next page.

In order to display the next page shown on the inner connection display 24 on the inner display 22, the display may be switched by the user tapping the ellipsis icon 211, or the next page may be moved to the inner display 22 in an animated display in response to a swipe or flick on the screen of the inner display 22. Note that, in a case where the content 201 includes a third page, the screen of the third page is displayed on the inner connection display 24 while the screen 8032 of the second page is displayed on the inner display 22.

FIG. 8 is a diagram schematically illustrating an example of a hardware configuration of the vehicle 1. The vehicle 1 includes an ECU 10, the display device 20, the center display 26, a sensor group 31, and the electrical equipment group 32. The ECU 10 can be configured as a computer having a processor (CPU, GPU, or the like), a main storage (RAM, ROM, or the like), and an auxiliary storage (EPROM, hard disk drive, removable medium, or the like). An operating system (OS), various programs, various tables, etc., are stored in the auxiliary storage, and by executing the programs stored therein, it is possible to realize each function (software module) that meets a predetermined purpose, as will be described later. However, some or all of the functions may be realized as a hardware module by a hardware circuit such as, for example, an ASIC, an FPGA or the like. The display device 20, the center display 26, the sensor group 31, and the electrical equipment group 32 are connected to the ECU 10. The ECU 10 is an example of an information processing apparatus.

The display device 20 includes the meter display 21, the inner display 22, the outer display 23, the inner connection display 24, the outer connection display 25, and a touch panel 27. The touch panel 27 is a unit for detecting touch operations performed on the meter display 21, the inner display 22, the outer display 23, the inner connection display 24, and the outer connection display 25. The meter display 21, the inner display 22, the outer display 23, the inner connection display 24, and the outer connection display 25 are each provided with the touch panel 27, which allows operation by touch. The meter display 21, the inner display 22, the outer display 23, the inner connection display 24, the outer connection display 25, and the touch panel 27 may be a single touch screen.

The sensor group 31 is a set of a plurality of sensors for obtaining sensor data used in the traveling of the vehicle 1. The sensors may obtain physical quantities or may obtain image data or the like. The sensor group 31 includes, for example, a sensor that detects the state of the vehicle 1, a sensor that detects the actions of the driver, etc. The sensor group 31 includes, for example, a speed sensor, an acceleration sensor, an accelerator opening sensor that detects the position of an accelerator pedal, a brake sensor that detects the position of a brake pedal, a steering wheel angle sensor that detects the angle of the steering wheel, an engine rotation speed sensor that detects the rotation speed of the engine, a yaw rate sensor, a turn signal switch sensor (a sensor that detects the state of a turn signal switch), a shift position sensor, a sensor that detects position information (GPS sensor), a sensor that detects the temperature inside the vehicle, a sensor that detects the temperature outside the vehicle, a radar that measures the distance to an object, etc.

The electric equipment group 32 is a set of electrical equipment used in the vehicle 1. The electrical equipment group 32 includes, for example, an air conditioner, a navigation device, an audio device, a telephone, wipers, headlights, side mirrors, electric seats, and a voice assistant.

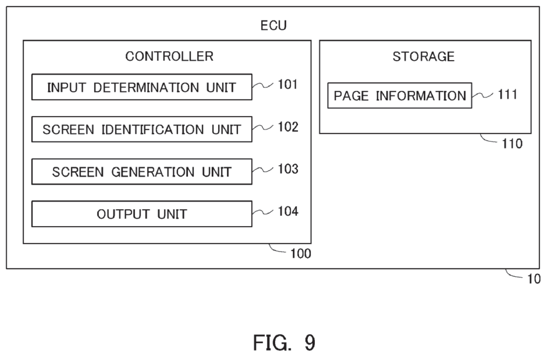

FIG. 9 is a diagram illustrating a functional configuration of the ECU 10. The ECU 10 includes, as its functional components, a controller 100 such as a processor or the like and the storage 110. The controller 100 is a functional component that is provided by, for example, the processor executing various programs stored in the auxiliary storage. The controller 100 includes an input determination unit 101, a screen identification unit 102, a screen generation unit 103, and an output unit 104. The storage 110 is a means for storing information, and is configured to include a main storage and an auxiliary storage.

The input determination unit 101 receives a signal from the touch panel 27 and determines an input operation performed by the user via the touch panel 27. The input determination unit 101 identifies a position touched by the user. In addition, when the user touches the touch panel 27 to perform a finger movement associated with a flick, swipe, tap, pinch, double tap, long tap, or multi-tap, the input determination unit 101 determines that a flick, swipe, tap, pinch, double tap, long tap, or multi-tap operation has been performed. The relationship between the user's finger movements and the user's input operations has been stored in the storage 110.

The screen identification unit 102 identifies a screen to be displayed on the inner display 22. The screen identification unit 102 can identify a screen currently displayed on the inner display 22 and a screen to be displayed on the inner display 22 in the future. The screen identification unit 102 identifies a screen corresponding to a button tapped by the user among buttons displayed on the home screen 801 or the menu screen 806, for example. Note that the screen identification unit 102 may identify the content 201 displayed on the inner display 22.

The screen generation unit 103 generates a screen to be displayed on the inner display 22 and the inner connection display 24 for each frame according to the screen identified by the screen identification unit 102. The screen identified by the screen identification unit 102, the screen to be displayed on the inner display 22, and the screen to be displayed on the inner connection display 24 have been stored in the storage 110 as page information 111.

The output unit 104 outputs a command to display a screen to the display device 20. The output unit 104 generates a signal for displaying the screen for each frame, and transmits the signal to the display device 20. In addition, when the user performs an operation to display the next page on the inner display 22 or the outer display 23, the output unit 104 outputs a command to the display device 20 so that the next page is displayed on the inner display 22 or the outer display 23.

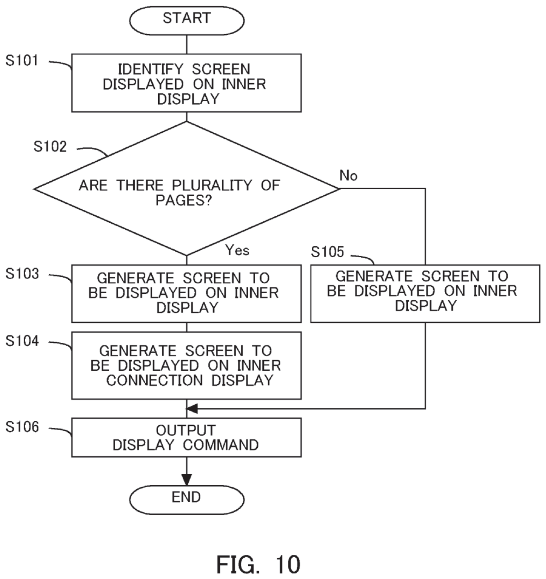

Next, processing in the ECU 10 when the content 201 is displayed will be described. FIG. 10 is a flowchart of the processing in the ECU 10 when the content 201 is displayed. The processing illustrated in FIG. 10 is executed in the ECU 10 at each predetermined time interval. Note that the ECU 10 may execute the routine illustrated in FIG. 10 with the activation of the vehicle 1 or the display device 20 as a trigger. As another example, the ECU 10 may execute the routine illustrated in FIG. 10 with an input from the user to the touch panel 27 as a trigger.

In step S101, the screen identification unit 102 identifies a screen to be displayed on the inner display 22. For example, the screen identification unit 102 identifies which screen in FIG. 3 is to be displayed. For example, when the user swipes or flicks the inner display 22, the screen identification unit 102 identifies a screen to be displayed next, according to the screen currently displayed and the display order of the screens illustrated in FIG. 3. In addition, for example, the screen identification unit 102 may identify the content 201 selected by the user, according to the position tapped by the user and the arrangement order of the GUI components 8061 at the current time point illustrated in FIG. 5. Then, the screen to be displayed on the inner display 22 may be identified according to the content 201 selected by the user. The current arrangement order of the GUI components 8061 has been stored in the storage 110.

In step S102, the screen identification unit 102 determines whether or not a plurality of pages are present in the screen identified in step S101. The screen identification unit 102 compares the screen identified in step S101 with the page information 111 stored in the storage 110 to determine whether or not a plurality of pages are present in the identified screen. If the screen identification unit 102 makes an affirmative determination in step S102, the processing proceeds to step S103, but if the screen identification unit 102 makes a negative determination, the processing proceeds to step S105.

In step S103, the screen generation unit 103 generates a screen to be displayed on the inner display 22 according to the screen identified in step S101. The screen to be displayed on the inner display 22 has been stored in the storage 110. The screen generation unit 103 generates a screen on the first page corresponding to the content 201.

In step S104, the screen generation unit 103 generates a screen to be displayed on the inner connection display 24 according to the screen identified in step S101. The screen to be displayed on the inner connection display 24 has been stored in the storage 110. The screen generation unit 103 generates a screen of the content of the next page in the order illustrated in FIG. 3 (see the content 202 of the next page in FIG. 6) or a screen of the second page corresponding to the content 201 (see the screen 8032 of the second page in FIG. 7).

In addition, in step S105, the screen generation unit 103 generates a screen to be displayed on the inner display 22 according to the screen identified in step S101. The screen to be displayed on the inner display 22 has been stored in the storage 110.

In step S106, the output unit 104 outputs to the display device 20 a command to display the screen generated in steps S103 to S105. At this time, the output unit 104 generates a command to display the screens generated in steps S103 and S105 on the inner display 22 and a command to display the screen generated in step S104 on the inner connection display 24, and outputs the commands to the display device 20.

As described above, according to the present embodiment, in a case where a plurality of pages are present in the screen displayed on the inner display 22 or the outer display 23, the screen corresponding to the next page is displayed on the inner connection display 24 or the outer connection display 25, so that the user can notice the presence of the next page. As a result, usability can be improved. Also, it is possible to effectively use the inner connection display 24 and the outer connection display 25.

### <Second Embodiment>

In a second embodiment, another example will be described in which the presence of the next page on the screen displayed on the inner display 22 or the outer display 23 is displayed on the inner connection display 24 or the outer connection display 25. Here, note that in the following, an example will be described in which the screen of the second page corresponding to the content 201 (see the screen 8032 of the second page in FIG. 7) is generated, but the same can be applied in a case where a screen of the content of the next page is generated in the order illustrated in FIG. 3 (see the content 202 of the next page in FIG. 6).

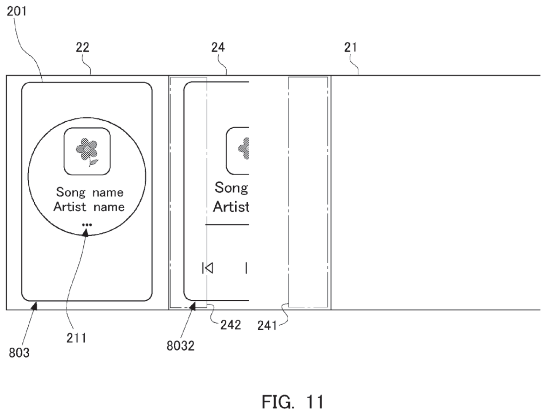

FIG. 11 is a view illustrating an example in which only the left half of the screen 8032 of the second page of the content 201 is displayed on the inner connection display 24. Note that FIG. 11 shows only the left half of the screen 8032 of the second page of the content 201, but it is not limited to this, as long as at least a portion of the screen is displayed. In addition, in the case where a part of the next page of the content 201 is displayed on the outer connection display 25, only the right half thereof is displayed. In this way, by displaying a part of the content 201, the user can also notice the presence of the next page.

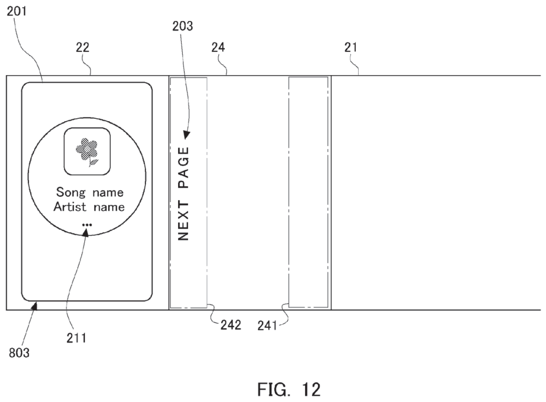

In addition, FIG. 12 is a view illustrating an example in which characters (text) indicating that the next page of the content 201 is present are displayed on the inner connection display 24. By displaying "next page" as indicated by reference numeral 203, the user is notified that there is a next page in the content 201. In this manner, by displaying the characters (text), the user can also notice the presence of the next page.

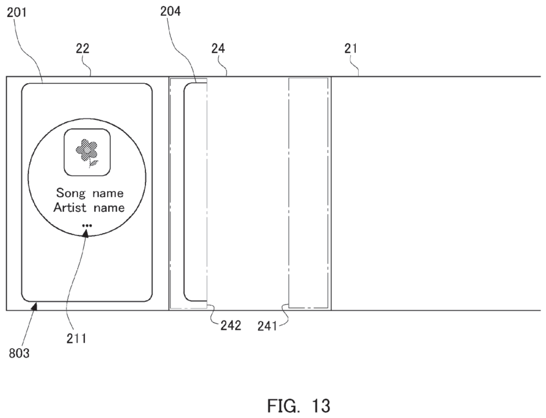

Further, FIG. 13 is a view illustrating an example in which only a part of a frame of the next page of the content 201 is displayed on the inner connection display 24. As indicated by reference numeral 204, by displaying a part of the frame of the next page, the user is notified that there is a next page in the content 201. In this manner, by displaying a part of the frame, the user can also notice the presence of the next page.

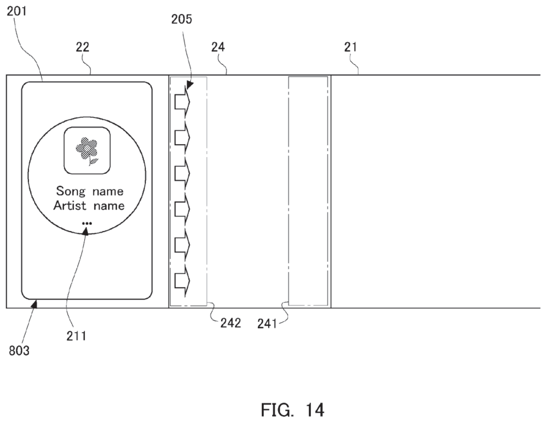

Furthermore, FIG. 14 is a view illustrating an example in which arrows indicating that the next page of the content 201 is present are displayed on the inner connection display 24. By displaying the arrows as indicated by reference numeral 205, the user is notified that there is a next page in the content 201. In this manner, by displaying the graphic, the user can also notice the presence of the next page.

### <Other Embodiments>

The above-described embodiments are merely examples, but the present disclosure can be implemented with appropriate modifications without departing from the spirit thereof. The processes and/or means (devices, units, etc.) described in the present disclosure can be freely combined and implemented as long as no technical contradiction occurs. In addition, the processes described as being performed by one device or unit may be shared and performed by a plurality of devices or units. Alternatively, the processes described as being performed by different devices or units may be performed by a single device or unit. In a computer system, it is possible to flexibly change what hardware configuration is used to realize each function.

In the above-mentioned embodiments, examples have been described in which the ECU 10 of the vehicle 1 functions as an information processing apparatus, but the present invention is not limited to this, and for example, a user's mobile terminal may function as an information processing apparatus, or an external server may function as an information processing apparatus.

The present disclosure can also be realized by supplying to a computer a computer program in which the functions described in the above-described embodiments are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

## Claims

1. An in-vehicle system comprising a display device (20) and an information processing apparatus (10) configured to output information via the display device (20),
the display device (20) comprising:
a touch panel (27);
a first display unit (21) disposed in front of a steering wheel (4);
a second display unit (22, 23) disposed on at least one side in a vehicle width direction with respect to the first display unit (21), the second display unit (22, 23) being also disposed on a rear side of a vehicle (1) with respect to the first display unit (21); and
a third display unit (24, 25) connecting the first display unit (21) and the second display unit (22, 23) to each other and having a curved surface (241, 242);
the information processing apparatus (10) comprising a controller (100) and a storage,
the controller (100) being configured to execute:
determining (S102), according to information stored in the storage, whether or not a plurality of pages are present on a screen displayed on the second display unit (22, 23);
generating (S104) a command to display a screen indicating the presence of the plurality of pages on the third display unit (24, 25) in response to determining that the plurality of pages are present on the screen displayed on the second display unit (22, 23); and
outputting (S106) the command thus generated to the display device (20).

2. An in-vehicle system comprising a display device (20) and an information processing apparatus (10) configured to output information via the display device (20),
the display device (20) comprising:
a touch panel (27);
a first display unit (21) disposed in front of a steering wheel (4);
a second display unit (22, 23) disposed on at least one side in a vehicle width direction with respect to the first display unit (21), the second display unit (22, 23) being also disposed on a rear side of a vehicle (1) with respect to the first display unit (21); and
a third display unit (24, 25) connecting the first display unit (21) and the second display unit (22, 23) to each other and having a curved surface (241, 242);
wherein the information processing apparatus (10) comprises a controller (100) configured to execute outputting (S106), to the display device (20), a command to display a screen indicating that a plurality of pages are present on the third display unit (24, 25) in a case where the plurality of pages are present on a screen displayed on the second display unit (22, 23).

3. The in-vehicle system according to claim 2, wherein the controller (100) outputs, to the display device (20), a command to display, on the third display unit (24, 25), at least a part of display items of a page next to a page to be displayed on the second display unit (22, 23) as the screen indicating that the plurality of pages are present.

4. The in-vehicle system according to claim 2, wherein the controller (100) outputs, to the display device (20), a command to display, on the third display unit (24, 25), characters or a graphic indicating that there is a page next to a page displayed on the second display unit (22, 23) as the screen indicating that the plurality of pages are present.

5. The in-vehicle system according to claim 2, wherein the information processing apparatus (10) further includes a storage configured to store a relationship between the screen displayed on the second display unit (22, 23) and the screen displayed on the third display unit (24, 25).

6. The in-vehicle system according to claim 2, wherein the screens displayed on the second display unit (22, 23) and the third display unit (24, 25) include a screen on which content related to control of the vehicle (1) is displayed or a screen on which content related to convenience of an occupant of the vehicle (1) is displayed.

7. An information processing apparatus (10) configured to output information via a display device (20),
the display device (20) comprising:
a touch panel (27);
a first display unit (21) disposed in front of a steering wheel (4);
a second display unit (22, 23) disposed on at least one side in a vehicle width direction with respect to the first display unit (21), the second display unit (22, 23) being also disposed on a rear side of a vehicle (1) with respect to the first display unit (21); and
a third display unit (24, 25) connecting the first display unit (21) and the second display unit (22, 23) to each other and having a curved surface (241, 242);
wherein the information processing apparatus (10) comprises a controller (100) configured to execute outputting (S106), to the display device (20), a command to display a screen indicating that a plurality of pages are present on the third display unit (24, 25) in a case where the plurality of pages are present on a screen displayed on the second display unit (22, 23).

8. The information processing apparatus (10) according to claim 7, wherein the controller (100) outputs, to the display device (20), a command to display, on the third display unit (24, 25), at least a part of display items of a page next to a page to be displayed on the second display unit (22, 23) as the screen indicating that the plurality of pages are present.

9. The information processing apparatus (10) according to claim 7, wherein the controller (100) outputs, to the display device (20), a command to display, on the third display unit (24, 25), characters or a graphic indicating that there is a page next to a page displayed on the second display unit (22, 23) as the screen indicating that the plurality of pages are present.

10. The information processing apparatus (10) according to claim 7, further comprising a storage configured to store a relationship between the screen displayed on the second display unit (22, 23) and the screen displayed on the third display unit (24, 25).

11. The information processing apparatus (10) according to claim 7, wherein the screens displayed on the second display unit (22, 23) and the third display unit (24, 25) include a screen on which content related to control of the vehicle (1) is displayed or a screen on which content related to convenience of an occupant of the vehicle (1) is displayed.
